# EUROPEAN PATENT APPLICATION

(11) **EP 3 287 690 A1**
(43) Date of publication of application: **28.02.2018**
(21) Application number: 15832665.2
(22) Date of filing: 21.08.2015
(51) Int. Cl.: F21S 8/00, F21V 5/00

(54) **BACKLIGHT MODULE AND DISPLAY DEVICE**

(30) Priority: 27.03.2015 CN 201510142743
(71) Applicant: BOE Technology Group Co., Ltd., Beijing 100015 (CN); Beijing BOE Multimedia Technology Co., Ltd., Beijing 100015 (CN)
(72) Inventor: MENG, Xianlei, Beijing 100176 (CN); GAO, Jianbin, Beijing 100176 (CN); LI, Huijun, Beijing 100176 (CN)
(74) Representative: Klunker IP Patentanwälte PartG mbB
(86) International application number: PCT/CN2015/087827
(87) International publication number: WO 2016/155212

(57) **Abstract**

A backlight module and a display device including the backlight module are provided. The backlight module includes a rear plate (12) and a light guide plate (13), the rear plate (12) includes a side wall (121) and an accommodating groove (123) defined at least partially by the side wall (121); the light guide plate (13) is located in the accommodating groove (123); and a resilient part (14) is provided between at least one lateral surface of the light guide plate (13) and the side wall, opposite to the lateral surface, of the rear plate (12). The resilient part (14) may be elastically compressed in a case of the thermal expansion of the light guide plate (13), to provide cushion for the extending deformation of the light guide plate (13), and thus to effectively depress the arch deformation of the light guide plate (13).

## Description

### TECHNICAL FIELD

Embodiments of present disclosure relate to a backlight module and a display device.

### BACKGROUND

At present, the backlight module of a display device may be classified into two types, i.e., the direct-light-type and the side-light-type, according to the distribution location of a light source (the light source generally adopts light-emitting diodes (LEDs) nowadays). The light source for the direct-light-type backlight module is arranged at the bottom of a light guide plate, and the backlight module of such a type is mainly applied to a display, a television and other large-sized display devices. The light source for the side-light-type backlight module is arranged at the lateral surface of a light guide plate, and the backlight module of such a type is mainly applied to a notebook computer, a palm computer, a cell phone and other small-sized display devices. With continuous improvement of techniques concerning LEDs, the side-light-type backlight modules are also coming to be used for large-sized display devices, to bring a better visual sensation for users.

In current backlight modules, there are mainly the following two structures for assembling the light guide plate and the rear plate together.

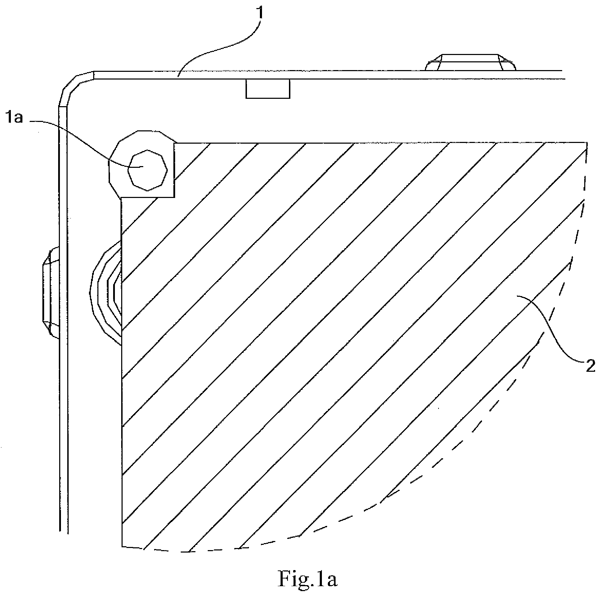

Fig.1a illustrates a first structure (i.e., a current technology 1), in which each of the four corners of the light guide plate 2 is provided with an opening, and the portion, corresponding to the opening, of the rear plate 1 is provided with a riveting steel column 1a, the riveting steel column 1a cooperates with the opening to achieve the assembly of the light guide plate 2 with the rear plate 1.

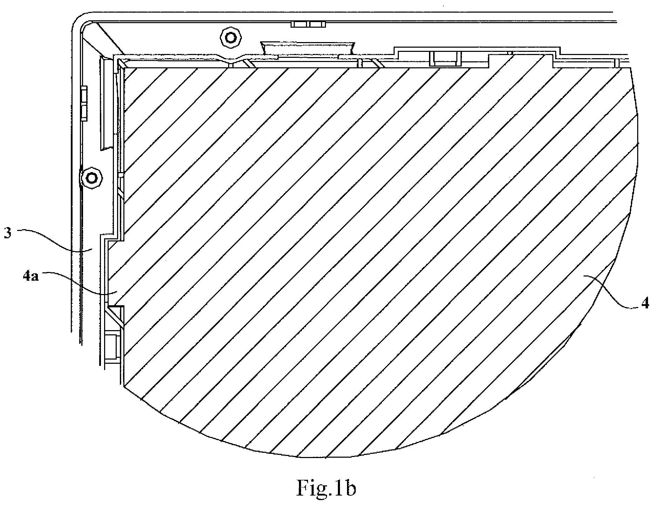

Fig.1b illustrates a second structure (i.e., a current technology 2), in which a side of the light guide plate 4 is formed with a protrusion 4a, the portion, corresponding to the protrusion 4a, of the rear plate 3 is provided with a groove, and the protrusion 4a cooperates with the groove to achieve the assembly of the light guide plate 4 with the rear plate 3.

The drawback in the above two current technologies is that the light guide plate may be pressed by the rigid riveting steel column or rigid groove and generate arch deformation in a case of the thermal expansion, and this adversely affects the uniformity of the backlight module and thus the display effect of the display device. Furthermore, the machining of the opening or the protrusion of the light guide plate not only goes against saving raw materials, but also results in a higher processing cost.

### SUMMARY

Embodiments of present disclosure provides a backlight module and a display device, to eliminate the backlight unevenness phenomenon induced by the thermal expansion of the light guide plate and thus to improve the display effect of the display device.

An embodiment of present disclosure provides a backlight module including a rear plate and a light guide plate, the rear plate includes a side wall and an accommodating groove defined at least partially by the side wall; the light guide plate is arranged in the accommodating groove; and a resilient part is arranged between at least one lateral surface of the light guide plate and the side wall, opposite to the lateral surface, of the rear plate.

In the technical solution of the embodiment of present disclosure, the resilient part between the lateral surface of the light guide plate and the side wall of the rear plate may be subjected to elastic compression in a case of the thermal expansion of the light guide plate, and thus it is possible to fix the light guide plate and provide cushion for the extending deformation of the light guide plate, so as to effectively depress arch deformation of the light guide plate. In contrast to current technologies, the technical solution of the embodiment of present disclosure can effectively eliminate the backlight unevenness phenomenon in the current technologies caused by the pressure, acted on the light guide plate, from the rigid riveting steel column or the rigid groove in a case of the thermal expansion of the light guide plate, and thus improve the display effect of the display device. Furthermore, it is unnecessary for the light guide plate to be machined with an opening or a protrusion, and this depresses material wastage to a large extent and thus reduces the processing cost. When the backlight module vibrates or falls off, the resilient part may also have a pretty cushioning protective effect.

For example, the resilient part includes a flexible pad. The flexible pad has a simple structure and a relatively low cost, and can have a better cushioning protective function.

For example, the resilient part is fixed to the side wall of the rear plate. Such a solution of the embodiment makes it is easy to assemble the backlight module, and thus facilitates the improvement of the assembly efficiency.

For example, the resilient part is connected to the side wall of the rear plate by means of an adhesive or a fastener.

For example, the resilient part is detachably connected to the side wall of the rear plate. The detachable connection between the resilient part and the rear plate facilitates the assembly and disassembly, and thus facilitates reducing the cost of maintenance.

For example, the portion, corresponding to the resilient part, of the side wall of the rear plate is provided with a through hole; and the resilient part has an alignment post passing through the through hole, and an end of the alignment post has an enlarged retainer portion fixed at outside of the side wall of the rear plate. In this embodiment, the flexible pad has a structural design which facilitates its assembly and disassembly and is not easy to be damaged.

For example, the resilient part has a boss for supporting the lateral surface of the light guide plate. By designing the boss structure of the resilient part, it is possible to provide the resilient part with a two-stage cushioning function. When the light guide plate experiences extending deformation due to thermal expansion, the boss is firstly pressed and thus compressed, and with further growth of the amount of the extending deformation of the light guide plate, the pressure makes the body portion of the resilient part generate relatively large compressive deformation, and this provides cushioning against the extending deformation of the light guide plate. Furthermore, the resilience of the boss can firmly secure the light guide plate, so that the light guide plate is not easy to depart from the rear plate, and thus the assembly accuracy of the light guide plate with the rear plate is improved.

For example, the resilient part has at least two bosses spaced from each other. Such a design may increase the elastic compression extent of the resilient part, so that it is much easier to regulate the elastic deformation of the resilient part, and that the light guide plate can be provided with even better elastic support and fixing, to improve the assembly accuracy in a case of the thermal expansion of the light guide plate.

For example, the flexible pad is a dark color flexible pad. The dark color flexible pad has a weaker light transmittance and thus has less impact on the optical quality of the backlight module

An embodiment of the present disclosure also provides a display device including the backlight module according to any one of the above-mentioned solutions. Because the optical quality of the backlight module is less likely to be influenced by the thermal expansion of the light guide plate, such a display device also has optimum display effect.

### BRIEF DESCRIPTION OF THE DRAWINGS

Fig.1a is a partial schematic top view of an assembly structure of a light guide plate with a rear plate in a current technology 1;
Fig.1b is a partial schematic top view of an assembly structure of a light guide plate with a rear plate in a current technology 2;
Fig.2a is a top view of an assembly structure of a light guide plate with a rear plate in a backlight module according to an embodiment of the present disclosure;
Fig.2b is an enlarged partial schematic view at location A in Fig.2a; and
Fig.3 is a schematic view showing a connection structure between a flexible pad and a rear plate.

### DETAILED DESCRIPTION

In order to eliminate the phenomenon of uneven backlight caused by the thermal expansion of the light guide plate, and then improve the display effect of the display device, embodiments of present disclosure provide a backlight module and a display device,. In the technical solutions of the embodiments of present disclosure, the resilient part between at least one lateral surface of a light guide plate and an opposite side wall of a rear plate may be subjected to elastic compression in a case of the thermal expansion of the light guide plate, thereby it is possible to secure the light guide plate and provide a buffering effect for the extending deformation of the light guide plate, so as to effectively depress the arch deformation of the light guide plate. In contrast to the current technologies, the technical solutions of the embodiments of present disclosure can effectively eliminate the backlight unevenness phenomenon in the current technologies caused by the pressure, acted on the light guide plate, from the rigid riveting steel column or rigid groove in a case of the thermal expansion of the light guide plate, so as to improve the display effect of the display device.

The technical solutions of the embodiments of present disclosure will be described below in conjunction with the drawings of the embodiments of present disclosure. Apparently, the described embodiments are just a part but not all of the embodiments of the disclosure. Based on the described embodiments of present disclosure, those skilled in the art can obtain other embodiment(s), without any inventive work, which should be within the scope of the invention.

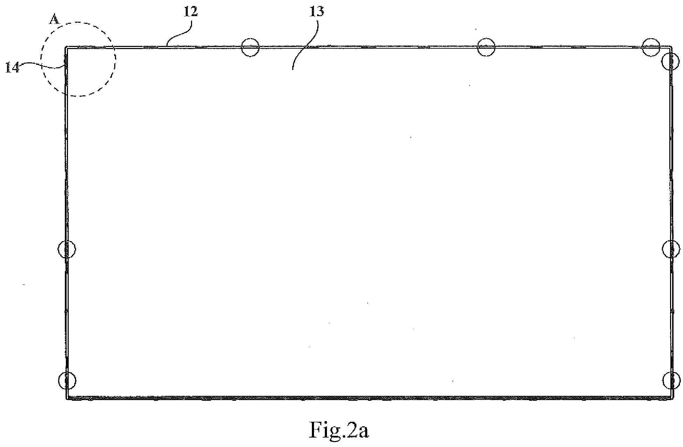

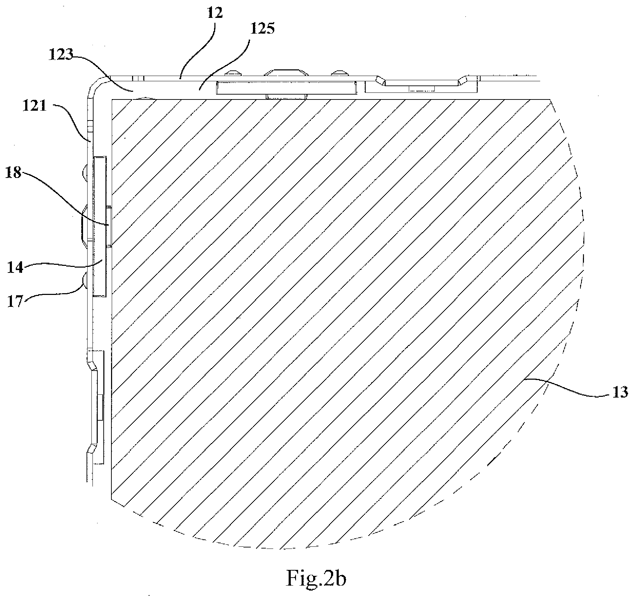

As illustrated in Figs.2a and 2b, an embodiment of present disclosure provides a backlight module, the rear plate 12 of the backlight module includes a side wall 121 and an accommodating groove 123 at least partially defined by the side wall 121; the light guide plate 13 of the backlight module is located in the accommodating groove 123; and a resilient part (specifically, a flexible pad 14 in this embodiment) is provided between at least one lateral surface of the light guide plate 13 and the side wall 121, opposite to the lateral surface, of the rear plate 12.

The resilient part preferably employs the flexible pad 14 in the embodiment shown in Figs. 2a and 2b, and the flexible pad 14 has a simple structure and a relatively low cost, and can present a better cushioning protective effect. Depending on the extension direction of the thermal expansion of the light guide plate 13, the resilient part may be arranged on at least one lateral surface of the light guide plate 13, for example, on one, two, three or four lateral surfaces of the light guide plate 13. Preferably, the resilient part is arranged at the non-incident lateral surface, for light, of the light guide plate 13. In the embodiment shown in Figs.2a and 2b, the resilient part is the flexible pad 14, and embodiments of the present disclosure are not limited thereto. In other embodiments of the present disclosure, the resilient part can also include a spring or a similar part.

Besides the rear plate 12 and light guide plate 13, the backlight module usually further includes other components such as a frame, a light source, a reflector plate and films, and the rear plate 12 is a main member for supporting the other components. The rear plate 12 includes a rectangular base plate 125 and the side wall 121 which locates at four sides of the rectangular base plate, and the rectangular base plate and the side wall define the accommodating groove 123 of the rear plate 12. As illustrated in Fig.2b, when the light guide plate 13 locates in the accommodating groove 123, each lateral surface of the light guide plate 13 is opposite to the side wall, adjacent to the lateral surface, of the rear plate. The flexible pad 14 can be arranged between the lateral surface of the light guide plate 13 and the opposite side wall of the rear plate 12. The quantity of the flexible pad 14 may be specifically designed according to the dimension of the light guide plate 13, so that the lateral surface of the light guide plate 13 is subjected to an even force.

In current technologies, the light guide plate is in a rigid contact with the side wall of the rear plate, in such a way that the light guide plate can generate arch deformation in a case of thermal expansion of the light guide plate and thus the uniformity of the backlight module can be influenced. In the technical solutions of the embodiments of present disclosure, the resilient part between the lateral surface of the light guide plate and the side wall of the rear plate can be elastically compressed in a case of the thermal expansion of the light guide plate, to provide a cushion effect for the extending deformation of the light guide plate, and thus to effectively depress arch deformation of the light guide plate. The present embodiments can effectively eliminate the phenomenon of uneven backlight caused by the thermal expansion of the light guide plate and thereby improve the display effect of the display device as compared with the current technology.

As illustrated in Fig.2a, the light guide plate 13 can have a rectangular design without an opening or protrusion machined thereon, and this can greatly depress the wastage of the material for the light guide plate, improve working efficiency and reduce the processing cost. Furthermore, due to the compressibility of the flexible pad 14, the control of the dimensions of the flexible pad 14 and the light guide plate 13 can be not that strict as compared with the current technologies, and this greatly reduces the difficulty in manufacturing the light guide plate 13 and the rear plate 12, which on the other hand reduces the processing cost of the backlight module. Such a flexible pad 14 can also provide a better cushioning protective effect when the backlight module vibrates or falls down, so as to depress the damage possibility of the backlight module.

As one preferable embodiment of the present disclosure, the flexible pad 14 is fixed to the side wall of the rear plate 12. The flexible pad 14 has been firmly positioned when the light guide plate 13 is assembled with the rear plate 12. Such a solution of the embodiment makes it is easy to assemble the backlight module and thus facilitates the improvement of the assembly efficiency.

The flexible pad can be connected to the side wall of the rear plate through any suitable fixed connection manner. For example, the flexible pad can be fixed to the side wall of the rear plate through an adhesive; and for another example, the flexible pad can be connected to the side wall of the rear plate by means of a fastener.

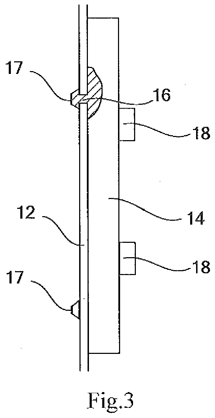

In an embodiment of the present disclosure, the flexible pad can be detachably connected to the side wall of the rear plate. This detachable connection facilitates the assembling of the flexible pad to the rear plate and the disassembling of the flexible pad from the rear plate, and this is conductive to reducing the cost of maintenance. For example, the rear plate can be provided with a fastener or a catch hole, and in assembly, it is possible to snap the flexible pad into the fastener or the catch hole on the rear plate after the placement of the light guide plate. As illustrated in Fig.3, in a preferred embodiment of the present disclosure, a position, corresponding to the flexible pad 14, of the side wall of the rear plate 12 is provided with a through hole; the flexible pad 14 includes an alignment post 16 passing through the through hole, and an end of the alignment post 16 has an enlarged retainer portion stuck at the outside of the side wall of the rear plate 12. For even better cooperation with the flexible pad and also for easier assembly, the retainer portion in this embodiment can be a flexible cap 17. However, embodiments of the present disclosure are not limited thereto, the retainer portion of the present disclosure can be optionally formed in various forms, and for example, the retainer portion can be a rigid fastener or the like. In the embodiments of the present disclosure, the through hole and the corresponding alignment post 16 can be provided in any suitable quantity, such as one, two, or three groups and so on. In assembling the flexible pad 14 with the side wall of the rear plate 12, the alignment post 16 passes through the through hole from the inner side of the side wall of the rear plate 12, and then the flexible cap 17 extends in a natural state and then is confined at the outside of the side wall of the rear plate 12. In separating the flexible pad 14 from the side wall of the rear plate 12, a needle rod is used to push the flexible cap 17 from the outside of the side wall of the rear plate 12 so as to disengage the alignment post 16 from the through hole. Furthermore, it is also possible to pull off the flexible pad 14 directly from the inner side of the side wall of the rear plate 12. In this embodiment, the raw material and structural property of the flexible pad 14 facilitates its assembly and disassembly, and such a flexible pad 14 is not easy to be damaged.

As illustrated in Fig.2b, the flexible pad 14 includes a boss (protuberant part) 18 for supporting the lateral surface of the light guide plate 13. The boss structure of the flexible pad 14 enables the flexible pad 14 to provide a two-stage cushioning effect. When the light guide plate 13 experiences deformation due to thermal expansion, the light guide plate 13 can firstly press and thus compress the boss 18, and with further growth of the amount of the extending deformation of the light guide plate 13, the pressing force can also cause the body portion of the flexible pad 14 to generate relative large compressive deformation, and this thereby provides cushioning against the extending deformation of the light guide plate 13 so as to effectively depress the arch deformation of the light guide plate 13. Furthermore, the resilience of the boss 18 can secure the light guide plate 13 so that the light guide plate 13 is not easy to depart from the rear plate 12, and thus the assembly accuracy of the light guide plate 13 with the rear plate 12 can be improved. The quantity and specific shape of the boss 18 are not limited, as illustrated in Fig.3, in this embodiment, the flexible pad 14 has 2 bosses 18 of a cylindrical form.

In an embodiment of the present disclosure, the flexible pad includes at least two bosses spaced from each other. The bosses can have any suitable shape, such as, circular, square, or long strip-like shape. Such a design can increase the elastic compression extent of the flexible pad, so that it is easier to regulate the elastic deformation of the flexible pad, to make the flexible pad provide better elastic support to the light guide plate, which can improve the assembly accuracy of the light guide plate in a case of the thermal expansion.

The flexible pad 14 can be made of any suitable material, for example, can be formed of a silicone flexible pad or a rubber flexible pad. Preferably, the flexible pad can have a Shore hardness of 60 to 70. The flexible pad in such a hardness range can provide the light guide plate with better cushioning, fixation and positioning, and also facilitate its assembling. The flexible pad 14 preferably adopts a dark color flexible pad, for example, a black flexible pad. The dark color flexible pad has a smaller light transmittance, can depress the light leakage phenomenon, and thus has less impact upon the optical quality of the backlight module.

An embodiment of the present disclosure also provides a display device including the backlight module according to any one of the above-mentioned embodiments. Due to the fact that the optical quality of the backlight module is less likely to be influenced by the thermal expansion of the light guide plate, such a display device also has optimum display effect.

It is apparent to those skilled in the art to make various modifications and variations to the present disclosure without departing from the spirit and scope of the present disclosure. In this way, if these modifications and variations belong to the scope of the claims of the present disclosure and their equivalents, then the present disclosure is intended to cover these modifications and variations.

## Claims

1. A backlight module, comprising:
a rear plate and a light guide plate, wherein the rear plate comprises a side wall and an accommodating groove defined at least partially by the side wall and the light guide plate is arranged in the accommodating groove; and
a resilient part, provided between at least one lateral surface of the light guide plate and the side wall, opposite to the lateral surface, of the rear plate.

2. The backlight module according to claim 1, wherein the resilient part is configured to be compressed by the light guide plate in a case of thermal expansion of the light guide plate.

3. The backlight module according to claim 1, wherein the resilient part comprises a flexible pad.

4. The backlight module according to claim 1, wherein the resilient part is fixed to the side wall of the rear plate.

5. The backlight module according to claim 4, wherein the resilient part is connected to the side wall of the rear plate by means of an adhesive or a fastener.

6. The backlight module according to claim 1, wherein the resilient part is detachably connected to the side wall of the rear plate.

7. The backlight module according to claim 6, wherein a position, corresponding to the resilient part, of the side wall of the rear plate is provided with a through hole; and the resilient part has an alignment post passing through the through hole, and an end of the alignment post is provided with an enlarged retainer portion stuck at outside of the side wall of the rear plate.

8. The backlight module according to claim 3, wherein the resilient part has a boss supporting the lateral surface of the light guide plate.

9. The backlight module according to claim 8, wherein the resilient part has at least two bosses spaced from each other.

10. The backlight module according to claim 3, wherein the flexible pad is a dark color flexible pad.

11. A display device comprising the backlight module according to any one of claims 1 to 10.
